(19) Europäisches Patentamt

European Patent Office

Office européen des brevets

(11) EP 0 758 630 B1

(12) EUROPEAN PATENT SPECIFICATION

(45) Date of publication and mention
of the grant of the patent:
**18.03.1998 Bulletin 1998/12**

(51) Int. Cl.$^6$: **C04B 35/634**, C04B 33/28,
B22C 1/22

(21) Application number: **95112818.0**

(22) Date of filing: **16.08.1995**

(54) **Slurry compositions for plastic molding purposes and products obtained thereof**

Schlickerzusammensetzung für plastische Formgebungsverfahren und daraus hergestellte Produkte

Compositions de barbotine pour procédés de moulages plastiques et produits obtenus

(84) Designated Contracting States:
**DE DK ES FR GB IT**

(43) Date of publication of application:
**19.02.1997 Bulletin 1997/08**

(73) Proprietor:
**BASF AKTIENGESELLSCHAFT
67056 Ludwigshafen (DE)**

(72) Inventors:
- **Katoh, Naoyuki
  Yokkaichi-shi, Mie (JP)**
- **Sanada, Kemehiko
  Yokkaichi-shi, Mie (JP)**
- **Muto, Hiroshi
  Yokkaichi-shi, Mie (JP)**

(56) References cited:
**EP-A- 0 256 364**      **EP-A- 0 262 326**
**EP-A- 0 670 189**      **FR-A- 2 571 716**

EP 0 758 630 B1

**Description**

This invention concerns a method of molding a base for plastic molding purposes, which is formed by kneading after dewatering a slurry composition, whereby 0.5 - 20 parts by weight of redispersible resin powder and water are added to, and mixed with, 100 parts by weight of base material for porcelain and/or ceramic purposes, and said base for plastic molding purposes is plastically molded into the prescribed shape by extrusion or power wheel molding.

Prior Art

Conventionally, for the plastic molding in the formation of porcelain and ceramics, a suitable quantity of water etc. has been added to the required base material, such as a base material for porcelain purposes or a base material for ceramic purposes for example, to provide fluidity (water content generally 40 - 70%) and the mixture has been mixed and pulverised in a ball mill, for example, to prepare a slurry, and then a pressed cake of water content 10 - 30% has been formed by dewatering in a filter press, for example. This pressed cake has then been formed into a base for plastic molding purposes using a vacuum kneading machine and then plastically molded, which is to say it has been molded to the prescribed shape by extrusion molding or wheel molding. The final molding has then been obtained by processes such as drying, pre-baking, glazing, firing and cutting etc., but when such a method is used there must be no problem with dewatering, there must be no gas bubbles in the base material, the drying of the moldings must be rapid, and the moldings must have a mechanical strength such that they can be handled in the finishing process and in transportation for example.

For this reason, when manufacturing porcelain in the past, the plasticity required for plastic molding has been imparted by including kawazume clay or kibushi clay, for example, in the base, and mechanical strength has been obtained. However, the mechanical strength of the moldings has been inadequate in large and thin moldings with the conventional base for porcelain purposes, and manufacture has been difficult.

Furthermore, the plasticity required for molding has been inadequate for plastic molding with the bases for ceramic purposes when manufacturing ceramics, and there has been a problem in that plastic moldings of adequate strength could not be obtained.

Methods wherein water-soluble resins or aqueous resin emulsions are added during slurry preparation or during kneading have been proposed as means of resolving these past difficulties (see Japanese Patent H3-64465, Japanese Patent H4-32155 and Japanese Patent Kokai H5- 104509).

[Problems to be Resolved by the invention]

The methods of resolution mentioned above enable the strength of the moldings to be increased by the addition of a water-soluble resin or an aqueous resin emulsion, but they have the following disadvantages.

(1) Firstly, separation is liable to occur because the difference in density between the porcelain base material or ceramic base material and the aqueous resin emulsion is considerable, and even if a uniformly dispersed slurry is prepared then warping and cracking are liable to occur in plastic moldings which have been obtained from the slurry. Uniform mixing is especially difficult in the case of a high viscosity slurry.

(2) Secondly, when dewatering, the water- soluble resin or aqueous resin emulsion migrate s together with the water which is being removed and so attachment to the filter cloth and blockage, flow-out from the system, drying and solidification on the surface of the filter cloth and attachment of pressed cake to the filter cloth occur, and the situation is such that concentration by filtration is impossible.

(3) Thirdly, even if a dewatered pressed cake is obtained and the addition is made skillfully at the time of kneading, filming due to surface drying of the resin occurs when subjecting the molding to a drying treatment and the drying of the inner parts is delayed, and warping, cracking and bulging, for example, are liable to occur.

As a result of thorough research carried out with a view to resolving the abovementioned past problems, the inventors have discovered that uniform dispersion and dewatering and concentration with a press can be accomplished very effectively and that plastic moldings which are characterized by having excellent drying properties and mechanical strength can be obtained by adding a redispersible resin powder to the base material and water and forming a slurry, and the invention is based upon this discovery.

[Means of Resolving These Problems]

The invention of this application is a method of molding a base for plastic molding purposes, which is formed by kneading after dewatering a slurry composition, whereby 0.5 - 20 parts by weight of redispersible resin powder and

EP 0 758 630 B1

water are added to, and mixed with, 100 parts by weight of base material for porcelain and/or ceramic purposes, and said base for plastic molding purposes is plastically molded into the prescribed shape by extrusion or power wheel molding.

The known porcelain raw materials, such as feldspar, silica, pottery stone, kaolin and clay for example, can be used for the porcelain base material in this present invention, and the known ceramic raw materials, such as alumina, zirconia, silica, ferrite, silicon carbide, silicon nitride or saialon for example, can be used for the ceramic base material. These porcelain base materials and ceramic base materials can each be used individually, or they can be used in a suitable formulation, as required. Below, the prescribed base materials, such as porcelain base materials and ceramic base materials for example, are referred to simply as the base material.

Furthermore, a so-called redispersible resin powder which has been obtained by spray drying a poly(vinyl acetate), vinyl acetate copolymer or acrylic resin based emulsion is used for the redispersible resin powder. The glass transition temperature of this redispersible resin powder is preferably -5°C or above, from the viewpoint of ideal film formation molding, and in those cases where it is below -5°C it is liable to undergo cohesion and attachment and, conversely, if the glass transition temperature is too high then film formation on molding is liable to become inadequate, and so a glass transition temperature of 0 - 20°C is preferred. Moreover, in those cases where a redispersible resin which has a high glass transition temperature is used, the drying temperature may be raised or the time may be increased, or a plasticizer or a film forming promoter may be added. Furthermore, the amount of redispersible resin powder which is added to the base material differs according to the type of base material, the type of redispersible resin powder and the characteristics of the sinter which is to be manufactured, for example, but it is generally 0.5 - 20 parts by weight, and preferably 1.0 - 15 parts by weight. in those cases where the amount of redispersible resin powder added is less than 0.5 parts by weight with respect to the base material, the mechanical strength of the moldings becomes inadequate, and in those cases where it exceeds 20 parts by weight the removal of the pressed cake from the filter cloth after dewatering as described hereinafter is impeded, and although there is no problem with the mechanical strength before firing, the shrinkage on firing is considerable, and not only is the fall in the strength of the sinter considerable but the characteristics of the base material are liable to be diminished.

These redispersible resin powders are available commercially with trade names such as, for example, Sumikafurekksu (registered trademark) RP-1005 and RP-110 (manufactured by Sumitomo Kagaku Kogyo K.K., Akuronarru (registered trademark) DS-6029 and DS-6031 manufactured by the Mitsubishi yuka Baadeisshe K.K., and Movinyl (registered trademark) DM200, DM289, 843, 5A, E45 manufactured by Hoechst Kasei K.K.

Moreover, methods for the manufacture of such redispersible resin powders have been disclosed, for example, in Japanese Patent Kokai 47-8188, Japanese Patent Kokai 59-199703 and Japanese Patent Kokai H6- 24820.

Furthermore, in addition, water is preferably added as a dispersion medium in such a way that the water content of the slurry is of the order of 40 - 70 percent by weight. Moreover, apart from water, inorganic deflocculating agents such as caustic soda, sodium silicate, water glass and phosphate esters, organic deflocculating agents such as diethylamine, di-n-propylamine, pyridine and polyacrylic acid salts, protective colloids such as humic acid, tannic acid and lignin, pulverization promoters such as stearic acid, oleic acid and naphthenic acid, and dispersing agents, wetting agents, water-reducing agents, fluidizing agents, high performance fluidizing agents and emulsifying agents, for example, can be added, as required.

The slurry is prepared by adding the prescribed amount of redispersible resin powder to the base material and adding the water and deflocculating agent, as required, and pulverizing with a known type of pulverizing machine, such as a ball mill or a tube mill for example, in such a way that the particle size of the base material is 0.1 - 10 $\mu$m. At this time, the redispersible resin powder is a powder and so when compared with a conventional aqueous resin emulsion foaming does not occur, and the separation which accompanies difference in density from the base material, and cohesion, do not occur and it is uniformly dispersed in a very stable manner, and a slurry of the correct viscosity is prepared ideally. Consequently, the redispersible resin powder is in general uniformly dispersed in a stable manner in the prepared slurry. Moreover, the base material and water may be pre-formed into a slurry and the redispersible resin powder may be added to, and mixed with, this slurry, but it is difficult to disperse and time is required for dispersion, and so the base material and the redispersible resin powder are preferably formed into a slurry at the same time.

The slurry obtained is dewatered and concentrated by means of a press type filtering machine, for example a filter press, using the known procedure, and a pressed cake of water content 10 - 30 percent by weight, and preferably of 15 - 25 percent by weight, is formed. This process is one in which the slurry is dewatered through a filter cloth and, since the redispersible resin powder is uniformly dispersed in a very stable manner, only water is passed through the filter cloth and removed, and there is no blockage of the filter cloth, cohesion or attachment, or filming, and the filtering operation can be carried out very easily and, moreover, there is no attachment of the pressed cake to the filter cloth and the pressed cake can be removed easily.

The pressed cake obtained is kneaded with a known kneading machine to prepare a plastic base. After this, plastic molding, such as extrusion molding or power-wheel molding for example, is carried out using this plastic base, and the prescribed plastic moldings are formed. The plastic moldings obtained are subjected to a suitable drying treatment, but they are best dried at 20°C or above. Moreover, in this present invention, the redispersible resin powder is in a stable and uniformly dispersed state and so bulging, peeling and cracking etc. are not likely to occur during the drying treatment or the firing treatment, and because the strength before firing is high it is possible to form prescribed thin forms. Furthermore, in this present invention the pulverized and mixed slurry is prepared in the most ideal state, and a base for plastic molding purposes is prepared by dewatering and concentrating this slurry, but this can also be used to the prepare a slurry for plastic molding purposes, with the addition of more water and dispersing agent, for example, to the plastic base.

The plastic moldings obtained are fired in the known way after a suitable drying treatment, and sinters are formed.

[Illustrative Examples]

Illustrative examples of the invention are indicated below, but the invention is not limited to these examples.

Examples 1 - 6 and Comparative Examples 1 - 6

Redispersible resin powder, water-soluble resin or aqueous resin emulsion (indicated as solid fraction) were added to base materials in accordance with the compounding proportions shown in Table 1, water was added and pulverization and mixing were carried out using a ball mill to prepare slurries of water content about 60%.

The abovementioned slurries were subjected to pressing pressures of up to 14 kg/cm$^2$ using a Model M14-5 filter press manufactured by K.K. Makino, and this pressure was maintained for 30 minutes, and then the pressure was released and pressed cakes were obtained. This procedure was repeated a maximum of twenty times, and the results are shown in Table 2. Next, the pressed cakes which had been formed were introduced into an Sy-11 model vacuum kneading machine manufactured by the ishikawateki Tekkojo K.K. and bases for plastic molding purposes were prepared in such a way that the hardness with an NGK clay hardness tester was 11. Subsequently, the materials were subjected to extrusion molding and power-wheel molding using the methods indicated below.

Extrusion Molding:     Continuous extrusion molding of depth 10 mm x width 30 mm, with chopping to length every 50 mm, was carried out using the above-mentioned vacuum kneading molding machine.

Power-Wheel Molding: Moldings of depth 50 mm x width 30 mm x thickness 10 mm were obtained using a power-wheel molding machine.

The moldings obtained with the two methods indicated above were draught dried for 24 hours at 20°C and then they were dried for 24 hours at 110°C. Moreover, the temperature was raised over a period of 5 hours to 1230°C and then maintained at this level for 1 hour, and sinters were obtained on cooling for 4 hours. The flex strengths after drying at 20°C before firing, after drying at 110°C and after firing, and the shrinkage factors during firing and the water uptakes were measured using the methods indicated below. The results are shown in Table 2.

Flex Strength: The flex strength was measured using the three-point support method.

$$\text{Flex Strength (kgf/cm}^2) = \frac{3PL}{2bh^2}$$

P:     Load (kgf)
L:     Span (cm)
b:     Specimen width (cm)
h:     Specimen thickness (cm)

Shrinkage Factor

$$\text{Shrinkage Factor (\%)} = \frac{50 \text{ mm} = \text{Length after firing (mm}}{50 \text{ mm}} \times 100$$

Water Uptake

$$\text{Water Uptake (\%)} = \frac{\text{Wt after 3 hrs in water at } 80°\text{C}^{*} - \text{Wt after drying}^{**}}{\text{Wt after Drying}^{**}} \times 100$$

[Effect of the invention]

According to this present invention, as indicated above, redispersible resin powder and water are added to, and mixed with, the base material and so the redispersible resin powder is dispersed uniformly in a very stable manner, the water content of the slurry is greatly reduced by filtering and dewatering to prepare a base for plastic molding purposes, and moldings of greatly increased mechanical strength are obtained by plastically molding to the prescribed form, and in this way it is possible to manufacture sinters which are thin, light or large when compared to the products of the conventional form.

*: Removed from water and surface water wiped off.
**: Weight after standing for 24 hours at 20°C - 65% after drying.

[Table 1]

| 7 | | | | | | | | | | | | |
|---|---|---|---|---|---|---|---|---|---|---|---|---|
| | 1 | 1 | 1 | 1 | 1 | 1 | 6 | 6 | 6 | 6 | 6 | 6 |
| 8 | 50 | 50 | 50 | 50 | 50 | 5 | 50 | 50 | 50 | 5 | 50 | 50 |
| 9 | 50 | 50 | 50 | 50 | 50 | 95 | 50 | 50 | 50 | 95 | 50 | 50 |
| 10 / 11 | A*3 | A | A | A | B*4 | A | – | C*5 | D*7 | E*6 | A | A |
| 10 / 12 | 0.5 | 1.0 | 5.0 | 20.0 | 1.0 | 10.0 | – | 4.0 | 0.5 | 10.0 | 0.2 | 25.0 |
| 13 | 150 | 150 | 160 | 180 | 150 | 170 | 150 | 150 | 150 | 170 | 150 | 190 |
| 14 | 15 | 15 | 15 | 16 | 15 | 15 | 15 | 17 | 15 | 17 | 15 | 16 |

KEY 1: Example, 6: Comparative Example, 7: Base Material, 8: Base Material for Porcelain Purposes *1 (parts by weight), 9: Base Material for Ceramic Purposes *2 (parts by weight), 10: Resin Added 11: Type, 12: Amount Added (parts by weight), 13: Water, 14: Froth formation during ball milling, 15: No froth, 16: Some froth, 17: Excessive frothing

FOOTNOTES:

*1: "High Grade Porcelain Base" (containing about 20% plastic minerals) manufactured by K.K. Myao Company Limited.

*2: "Almina AMS-9" manufactured by the Sumitomo Kagaku Kogyo Co.*

3: Acrylic resin based redispersible resin powder "Akuronaaru DS-6031" (glass transition point 10°CC) manufactured by Mitsubishi yuka Baadeisshe K.K.

*4: Poly(vinyl acetate) based redispersible resin powder "5umikafurekkusu RP-1005" (glass transition point 0°C) manufactured by Sumitomo Kagaku Kogyo K.K.

*5: Acrylic resin based aqueous resin emulsion "Akuronarru yJ-3042D" (glass transition point 2°C) manufactured by Mitsubishi yuka Baadeisshe K.K.

*6 Paraffin based aqueous resin emulsion "Makuseron A" (glass transition point 5°C) manufactured by Nakagyo yushi K.K.

*7 Water-soluble resin CMC "Serogen WS-C" manufactured by Daiichi Kogyo Seiyaku K.K.

[Table 2]

| | | | 1 | 1 | 1 | 1 | 1 | 1 | 2 | 2 | 2 | 2 | 2 | 2 |
|---|---|---|---|---|---|---|---|---|---|---|---|---|---|---|
| 3 | 4 | 5 | 19.2 | 23.1 | 38.7 | 79.1 | 18.7 | 36.9 | 12.6 | – | 13.5 | – | 14.2 | 82.7 |
| | | 6 | 25.9 | 31.8 | 50.0 | 92.4 | 25.1 | 46.2 | 15.1 | – | 16.4 | – | 17.7 | 96.1 |
| | | 7 | 801.0 | 787.0 | 777.0 | 754.0 | 792.0 | – | 808.0 | – | 763.0 | – | 807.0 | 711.0 |
| | 8 | | 7.8 | 7.8 | 8.1 | 8.5 | 7.9 | – | 7.8 | – | 8.2 | – | 7.8 | 9.0 |
| | 9 | | 7.9 | 8.1 | 8.5 | 9.4 | 8.1 | – | 7.8 | – | 8.6 | – | 7.9 | 10.2 |
| 10 | 11 | 12 | 17.9 | 20.6 | 36.8 | 71.0 | 16.9 | 32.1 | 12.2 | – | 12.8 | – | 13.8 | 76.0 |
| | | 13 | 21.6 | 28.7 | 46.2 | 88.0 | 21.0 | 41.8 | 12.9 | – | 14.1 | – | 17.5 | 91.7 |
| | | 14 | 773.0 | 756.0 | 738.0 | 719.0 | 767.0 | – | 769.0 | – | 731.0 | – | 771.0 | 682.0 |
| | 15 | | 7.5 | 7.6 | 7.9 | 8.3 | 7.5 | – | 7.5 | – | 8.2 | – | 7.5 | 8.5 |
| | 16 | | 8.5 | 8.5 | 8.7 | 9.8 | 8.4 | – | 8.3 | – | 9.2 | – | 8.4 | 10.7 |
| 17 | | 18 | 0 | 0 | 0 | Δ | 0 | 0 | 0 | + | X | X | 0 | Δ |
| | | 19 | 23 | 23 | 23 | 25 | 23 | 23 | 23 | 24 | 24 | 24 | 23 | 28 |
| | | 20 | 26 | 26 | 26 | 26 | 26 | 26 | 23 | 27 | 28 | 27 | 26 | 28 |
| | | 21 | 22.9 | 23.0 | 23.1 | 23.5 | 23.0 | 15.3 | 22.9 | – | 24.2 | – | 22.9 | 23.7 |
| 22 | | | | | | | | | | 29 | 30 | | | |

KEY  1: Example,  2: Comparative Example,  3: Extrusion Molding, 4: Mechanical Strength (kgf/cm²),  5: After drying at 20°C,  6: After drying at 110°C,  7: After firing, 8: Shrinkage Factor (%),  9: Water Uptake (%), 10: Power  wheel  molding,  11: Mechanical  Strength  (kgf/cm²),  12: After drying at 20°C,  13: After drying at 110°C,  14: After firing,  15: Shrinkage Factor (%), 16: Water Uptake (%), 17: Dewatering Process,  18: Twenty Times Continuous Usability,  19: Filter Cloth Blockage, 20: Filter Cloth Cleanability,  21: Pressed Cake Water Content,  22: Remarks,  23: No,  24: Yes,  25: Some,  26: Easy,  27: Difficult,  28: Rather Difficult,  29: Considerable blockage.  Resin solidif ication, could not be used continuously.  30: Dewatering possible but blockage occurred immediately.  Could be reused on washing with water.

EP 0 758 630 B1

**Claims**

1. Method of molding a base for plastic molding purposes, which is formed by kneading after dewatering a slurry composition, whereby 0.5 - 20 parts by weight of redispersible resin powder and water are added to, and mixed with, 100 parts by weight of base material for porcelain and/or ceramic purposes, and said base for plastic molding purposes is plastically molded into the prescribed shape by extrusion or power wheel molding.

**Patentansprüche**

1. Verfahren zur Formung einer nach Entwässern einer Schlickerzusammensetzung, wobei 100 Gewichtsteilen Porzellan- und/oder Keramikgrundmasse 0,5 - 20 Gewichtsteile redispergierbares Harzpulver und Wasser zugesetzt und eingemischt sind, durch Kneten hergestellten plastischen Formmasse, bei dem man die Formmasse für die plastische Formgebung durch Extrusion oder Formung auf der Töpferscheibe plastisch in die vorgeschriebene Form bringt.

**Revendications**

1. Procédé de moulage d'une pâte pour moulage plastique, pâte qui est formée par malaxage après déshydratation d'une composition de barbotine, dans lequel on ajoute 0,5-20 parties en poids d'une poudre de résine redispersible et d'eau à 100 parties en poids de matériau de pâte pour porcelaine et/ou céramique et on les mélange, et ladite pâte pour moulage plastique est soumise à un moulage plastique à la forme voulue par extrusion ou moulage au tour électrique.